# EUROPEAN PATENT APPLICATION

(11) **EP 4 607 495 A1**
(43) Date of publication of application: **27.08.2025**
(21) Application number: 24159343.3
(22) Date of filing: 23.02.2024
(51) Int. Cl.: G09B 23/28

(54) **MEDICAL TRAINING SYSTEM AND METHOD FOR MEDICAL TRAINING**

(71) Applicant: Virtamed AG, 8952 Schlieren (CH)
(72) Inventor: GHEZA, Frederico, 25052 Piancogno (IT); VEUM, Lars, 8952 Schlieren (CH); HOHL, Marcel, 8952 Schlieren (CH)
(74) Representative: Clerc, Natalia

(57) **Abstract**

A medical training system comprises a tangible and manually operated simulator assembly configured to perform medical procedures in a simulated medical procedure setup and a control unit providing the simulated medical procedure setup, detecting activities of the manually operated simulator assembly and assessing the detected activities. The control unit is capable of generating a customized curriculum for a user based on known user's skills. The control unit comprises a memory with skills categorised in categories, wherein the control unit considers at least one of the following categories of skills when drawing up the customized curriculum
- a first category referring to handling of hardware to be used in a specific medical procedure operation,
- a second category referring to handling of views during the specific medical procedure, and
- a third category referring to at least one further matter related to the specific medical procedure.

The inventive medical training system enables to optimize training success and to minimize training time.

## Description

### TECHNICAL FIELD

The present invention relates to a medical training system for medical procedures, especially for surgical operations, and a method for medical training.

### PRIOR ART

Medical procedures, especially surgical operations, such as endoscopy, arthroscopy, laparoscopy, and other minimally invasive surgery applications, can be trained in medical training systems which simulate the medical procedure setup. The users, namely trainees, physicians, and surgeons, learn to master the indirect hand-eye coordination required by the manipulation of medical instrumentation, such as endoscope or an ultrasound probe, in addition to the conventional medical instruments and procedures. Computerized medical training simulators enable the users to develop and improve their practice in a virtual reality environment before practicing in the real world-operation room.

In some embodiments, such medical training systems provide a mixed reality scenario where the user jointly interacts with real objects in a physical environment and in a related virtual environment. These simulators include a screen or virtual reality headset for displaying the virtual reality and a human anatomy model in real size, such as a joint model or an organ model, as well as a tangible medical procedure instrument. The model is adapted with sensors and mobile members for guiding, tracking, and controlling the medical instrument operation within the anatomy model. Such medical training systems are for example disclosed in WO 2014/041491 A1, US 2015/0325151 A1, and WO 2020/164829 A1.

The historical type of surgery, making a relatively large incision in a patient to access the surgical site, is nowadays often replaced by minimally invasive (including robotic) surgery allowing a surgeon to perform procedures through relatively small incisions. In telesurgery, the surgeon uses some form of remote control to manipulate surgical instrument movements rather than directly holding and moving the instruments by hand. The surgeon is provided with an image of the surgical site at a remote location. While viewing typically a three- dimensional image of the surgical site on a suitable display, the surgeon performs the surgical procedure on the patient by manipulating master control input devices, which in turn control the motion of robotic instruments. This enables small, minimally invasive surgical apertures to treat tissues at surgical sites within the patient. An example of such a teleoperated surgery system is well-known under the name da Vinci^{®} Surgical System and for example described in EP 2 884 935 B1.

Medical training systems provide training in the use of such teleoperated medical systems. For example, the medical training system can be coupled to a surgeon console instead of the actual other system components, to provide a surgeon with a simulation performing the procedure. With such a system, the surgeon can learn how simulated instruments respond to manipulation of the console controls, i.e., of the master control input devices. Instead of real-world pictures, the user sees a virtual operation site and a simulated medical procedure setup. Such a medical training system is for example described in EP 3 084 747 B1.

Other training systems providing training in the use of teleoperated medical systems comprise a surgeon control with master input devices as a stand-alone-solution, i.e., without being coupled to a real teleoperated medical system.

US 2020/0302296 A1 describes a system which provides customized training in the medical field.

WO 2023/178092 A1 discloses a system and a method for generating customized medical simulations to improve the training of clinicians. The medical skill development system identifies a user's skill development need and generates a customized syllabus. The system uses the clinician profiles and prior procedures to create simulation exercises that address the development needs of the clinician.

### SUMMARY OF THE INVENTION

It is an object of the present invention to provide an improved medical training system for medical procedures, especially for surgical operations, and an improved method for medical training.

This object is achieved by a medical training system with the features of claim 1 and a method with the features of claim 15.

The inventive medical training system comprises a tangible and manually operated simulator assembly configured to perform medical procedures in a simulated medical procedure setup and a control unit providing the simulated medical procedure setup, detecting activities of the manually operated simulator assembly and assessing the detected activities. The control unit is capable of generating a customized curriculum for a user based on known user's skills. The control unit comprises a memory with skills categorised in categories and the control unit considers at least one of the following categories of skills when drawing up the customized curriculum:
- a first category referring to handling of hardware to be used in a specific medical procedure operation,
- a second category referring to handling of views during the specific medical procedure, and
- a third category referring to at least one further matter related to the specific medical procedure.

Preferably, all of the above categories of skills are considered.

The categories are not restricted to a specific type of medical procedure, but are categorized in a more general way, such as hardware handling in general, handling views and other matters, which are for example not categorized in a specific group. This ensures that a user is a real expert on all the tasks he/her will need to perform a specific medical procedure. Training programs referring to specific medical procedures, especially specific surgical operations, have the disadvantage that a high score in the assessment of the skills can be achieved but still some tasks have not been fulfilled on an expert level or even on a satisfying level. Additionally, the problem faced by the user is that current training setups require on-site or post-training input from trainer or proctors. The inventive system, however, ensures that the user will be trained to optimally perform different types of tasks in a specific medical procedure, since he/she was trained to obtain best scores in all the different types of general tasks. This inventive system can provide a proctor-less training setup.

In addition, users which can handle some tasks in an optimal way but have difficulties with other tasks can specifically be trained with regard to their deficiencies, without having to spend too much time on skills they already master at expert level. This minimizes the time the users are spending on the medical training system.

The inventive medical training system optimizes training success and minimizes training time.

Preferably, each category of skills is coupled with training exercises stored in an according training memory, wherein the training exercises enhance the specific type of skill.

In some embodiments, the training memory or an additional memory comprises exercises tailored to a specific medical procedure, especially to a specific surgical operation.

Preferably, the categories are divided into sub-categories.

Preferably, the first category includes at least one, preferably all, of the following sub-categories
- semantic translation,
- hand instrumentation,
- and use of pedals.

In preferred embodiments, at least one, preferably all, of the following sub-categories are further included in addition in the first category
- use of teleoperated end-effectors or servo-controlled end-effectors, for example, the DaVinci Endowrist
- clutching,
- docking.

Preferably, the second category includes at least one, preferably all, of the following sub-categories
- port placement,
- optics horizon,
- optimal surgical field.

Preferably, the following sub-category is included in addition in the second category
- exposure of a fourth arm in tele-operated surgeries.

In some embodiments, the third category includes at least the following sub-category
- performance of the non-dominant hand of the user.

Preferably, the following sub-category is included in addition in the third category
- surgical landmarks.

In some embodiments, the memory of the control unit comprises additional categories or sub-categories. In a preferred embodiment, the memory of the control unit further comprises a fourth category referring to tissue handling during the specific medical procedure and the control unit considers this fourth category when drawing up the customized curriculum.

Preferably, the fourth category comprises at least one of the following sub-categories
- suture handling,
- use of energy,
- kind of dissection.

In some embodiments, the performance of a user in each category as a whole is assessed and/or his/her performance in the individual sub-categories is assessed. In some embodiments, the assessment made for the whole category and/or the assessment made for each sub-category is used for generating the curriculum.

In some embodiments, the control unit is programmed such that it considers more subcategories of one category in the customized curriculum when the user has a score below an expected value in one of the subcategories of this category.

In some embodiments, the system is programmed such that it considers less or no subcategories of one category in the customized curriculum when the user has a score above an expected value in one of the subcategories of this category.

Preferably, the control unit comprises an assessing module capable of assessing the detected activities and a customizing module capable of customizing the curriculum for a user based on the assessment made by the assessing module and/or on input data of the user.

In some embodiments, the medical training system is simulating a teleoperated medical system, for example one of the systems mentioned in the introductory part of this text, especially the da Vinci^{®} System. The medical training system in these embodiments comprises a surgeon control with master input devices which manipulate simulated instruments of the simulated teleoperated medical system.

In other embodiments, the medical training system is a mixed reality scenario medical system enabling a user to interact with real objects in a physical environment and in a virtual environment, especially as described in the introductory part of this text.

The inventive method for generating a customized curriculum for a user uses a medical training system with the features mentioned above. The control unit, in a first step detects activities of the manually operated simulator assembly and assesses the detected activities and/or asks for user input about his/her skills. In a second step, the control unit considers, based on an assessment made on the detected activities and/or on the user's input referring to his/her skills, the categories of skills stored in its memory to generate the customized curriculum.

Further embodiments and variants of the invention are laid down in the dependent claims.

### BRIEF DESCRIPTION OF THE DRAWINGS

A preferred embodiment of the invention is described in the following with reference to the drawings, which are for the purpose of illustrating the present preferred embodiments of the invention and not for the purpose of limiting the same. In the drawings,
- Fig. 1: shows a mixed reality scenario medical system according to a first embodiment of the invention and
- Fig. 2: shows the categories and sub-categories of a memory of an inventive medical training system.

### DESCRIPTION OF PREFERRED EMBODIMENTS

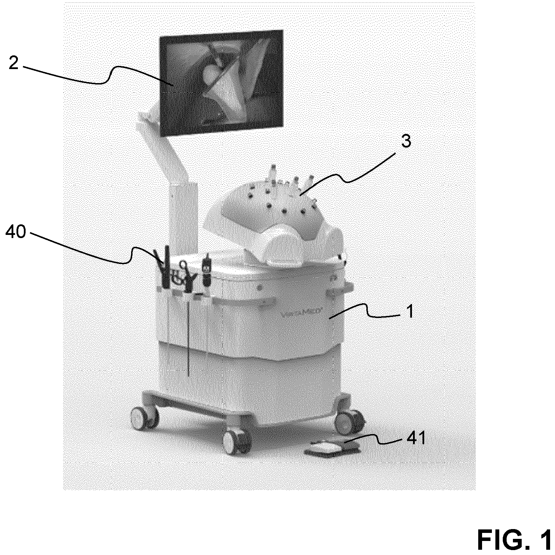

The training system shown in figure 1 is a mixed reality scenario medical system. The basic elements are known in the state of the art. The mixed reality scenario medical system comprises a main body with a control unit 1, a display 2, a human anatomy model 3 in real size and tangible instruments 40, 41.

The human anatomy model 3 is usually representing only a specific part of a human body. In this picture an insufflated abdomen is shown for laparoscopy training.

The tangible instruments to be held in the hands 40 correspond to real instruments used in laparoscopy. The pedals 41 are used for activation of electro-cauterization elements and other device mechanism controls.

The tangible instruments 40, 41 have input sensors implemented within, for the acquisition of position, orientation, other degrees of freedom, and relative position to the other instruments and the anatomical body 3. The anatomical body 3 also contains input sensors within for acquisition of parameters. The input sensors connect to the control unit 1 for data acquisition.

The control unit 1 controls the virtual views displayed on the screen based on the activities of the user, i.e., his use of the tangible instruments 40, 41. The virtual views are generated by the values of the input sensors in tangible instruments 40, 41, and anatomical body 3 that are controlled and manipulated by the user.

The control unit 1 has also input means for user input, such as his information about his skills and experiences. The input means are not shown in the picture.

The control unit 1 has also input means for user input, such as his information about his skills and experiences. The input means are not shown in the picture.

The control unit 1 has means of acquiring input data. The control unit 1 has means of storing data sets for the optimal path and for the data sets.

Instead of such a mixed reality scenario medical system, a training system simulating a teleoperated medical system can also be used, such as a system simulating the well-known da Vinci^{®} system.

The control unit provides different exercises to train the skills of the user. The user identifies himself/herself when starting the training system.

The control unit either makes a first assessment by starting with some basic exercises or it starts with exercises according to an already created curriculum of this specific user. In some variants, it may also use the inputs of the user to establish a new curriculum and it will start with according exercises.

During use of the system, the control unit will preferably assess the performance of the user in the completed exercises, and it will adjust the curriculum based on the assessment made.

The skills, the user must acquire or train, are categorized in categories and preferably in sub-categories stored in a memory of the control unit.

The exercises are stored as well in this memory or in a separate memory, and they are assigned to the categories and sub-categories. One exercise may train skills of more than one category or sub-category. And one skill of a category or a sub-category may be trainable in more than one exercise.

The control unit chooses exercises to be performed by the user, wherein the exercises are chosen from the categories and sub-categories based on the customized curriculum.

During performance of the exercise, the training system acts in the well-known way. This means for example that sensors are present to detect the movement of the user, time is measured, and other criteria are monitored by the control unit.

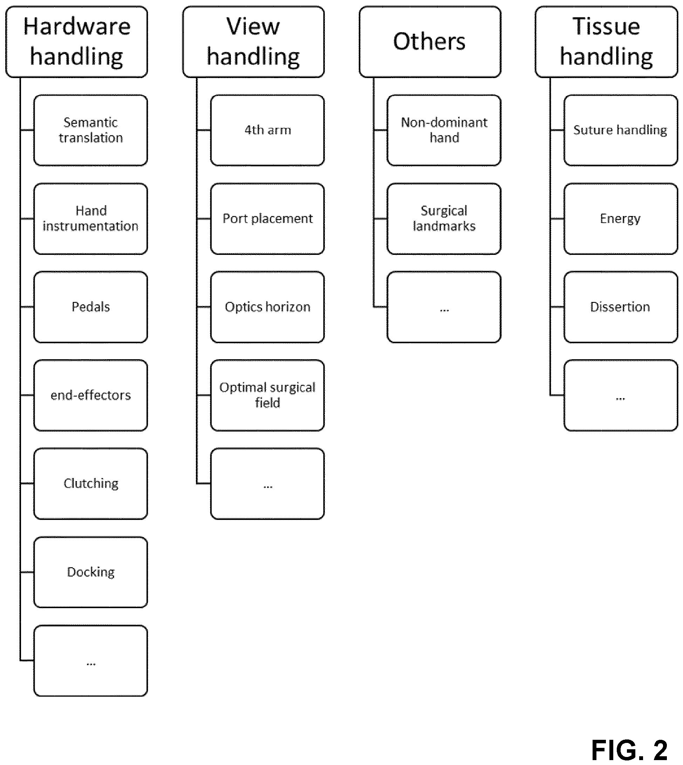

Figure 2 shows an example of the categories and subcategories used.

The first category refers to the skill in hardware handling. This category includes several sub-categories.

The subcategory "semantic translation" refers to the skill of the surgeon to understand and/or use different expressions in specific medical processes, especially in the surgical operation field.

The subcategory "hand instrumentation" refers to the training and improvement of the use and control of the manually operated master devices, which can include hand controllers.

The subcategory "Pedals" refers to the use of the pedals of the training system, especially when the pedals are also used in the real teleoperated medical systems.

The subcategory "Multifunctional instruments" refers to the instrumentation with multiple surgical uses, for example the Endowrist, which is a multi-use end-effector used in the da Vinci^{®} system.

The subcategory "clutching" refers to the use of safety features of the end-effectors, especially when the hands are moved from the master controllers.

The subcategory "docking" refers to the skills of the surgeon in the removal of the end-effectors from the surgical volume within the patient or the insertion of the end-effectors into the surgical volume within the patient.

The second category refers to the skill in handling the view. This category includes several sub-categories.

The subcategory "4^{th} arm" refers to the skill of the surgeon to use the available end-effectors of a tele-operated surgical robot.

The subcategory "port placement" refers to the skill of the surgeon to position and place the port.

The subcategory "optics horizon" refers to the skill of the surgeon to use the surgical optics, within a range of 0°-70°, in special 30°, to maintain and identify the horizon.

The subcategory "optimal surgical field" refers to the skill of the surgeon to choose an optimal surgical field when performing the medical process.

The third category refers to the skill in handling other matters. This category preferably includes at least two sub-categories.

The subcategory "non-dominant hand" refers to the skill of the surgeon to use his non-dominant hand.

The subcategory "surgical landmarks" refers to the performance of the surgeon at the surgical landmarks.

The fourth category refers to the skill in handling tissue handling. This category preferably includes several sub-categories.

The subcategory "suture handling" refers to the skill of the surgeon to handle sutures.

The subcategory "energy" refers to the performance of the surgeon when applying energy to the human body.

The subcategory "dissection" refers to the performance of the surgeon when dissecting, either with a sharp instrument or a blunt instrument.

Additional categories and/or subcategories can be present. Which of the above categories and subcategories are present depends for example on the training system used, i.e. if it is a mixed reality scenario training system or a simulated teleoperated medical system, especially a training system for surgery. One advantage of the invention is the combination and permutations of the sub-categories to create both a large variety of training possibilities while providing an individualized approach.

## Claims

1. A medical training system comprising
a tangible and manually operated simulator assembly configured to perform medical procedures in a simulated medical procedure setup
and
a control unit providing the simulated medical procedure setup, detecting activities of the manually operated simulator assembly and assessing the detected activities,
wherein the control unit is capable of generating a customized curriculum for a user based on known user's skills,
**characterized**
**in that** the control unit comprises a memory with skills categorised in categories and
**in that** the control unit considers at least one of the following categories of skills, preferably all of the following categories of skills, when drawing up the customized curriculum
- a first category referring to handling of hardware to be used in a specific medical procedure operation,
- a second category referring to handling of views during the specific medical procedure, and
- a third category referring to at least one further matter related to the specific medical procedure.

2. The medical training system according to claim 1, wherein the first category includes at least one of the following sub-categories
- semantic translation,
- hand instrumentation,
- and use of pedals.

3. The medical training system according to claim 2, wherein the first category further includes at least one of the following sub-categories
- use of teleoperated end-effectors or of servo-controlled end-effectors,
- clutching,
- docking.

4. The medical training system according to any one of claims 1 to 3, wherein the second category includes at least one of the following sub-categories
- port placement,
- optics horizon
- optimal surgical field.

5. The medical training system according to claim 4, wherein the second category further includes at least the following sub-category
- exposure of a fourth arm in tele-operated surgeries

6. The medical training system according to any one of claims 1 to 5, wherein the third category includes at least the following sub-category
- performance of the non-dominant hand of the user.

7. The medical training system according to claim 6, wherein the third category further includes the following sub-category
- surgical landmarks.

8. The medical training system according to one of claims 1 to 7, wherein the memory of the control unit further comprises a fourth category referring to tissue handling during the specific medical procedure and wherein the control unit considers this fourth category when drawing up the customized curriculum.

9. The medical training system according to claim 8, wherein the fourth category comprises at least one of the following sub-categories
- suture handling,
- use of energy,
- kind of dissection.

10. The medical training system according to any one of claims 1 to 9, wherein the control unit is programmed such that it considers more subcategories of one category in the customized curriculum when the user has a score below an expected value in one of the subcategories of this category.

11. The medical training system according to any one of claims 1 to 10, wherein the system is programmed such that it considers less or no subcategories of one category in the customized curriculum when the user has a score above an expected value in one of the subcategories of this category.

12. The medical training system according to any one of claims 1 to 11, wherein the control unit comprises an assessing module capable of assessing the detected activities and a customizing module capable of customizing the curriculum for a user based on the assessment made by the assessing module and/or on input data of the user.

13. The medical training system according to any one of claims 1 to 12, wherein it is simulating a teleoperated medical system and wherein it comprises a surgeon control with master input devices which manipulate simulated instruments of the simulated teleoperated medical system.

14. The medical training system according to any one of claims 1 to 12, wherein it is a mixed reality scenario medical system enabling a user to interact with real objects in a physical environment and in a virtual environment.

15. A method for generating a customized curriculum for a user using a medical training system according to one of claims 1 to 14, wherein the control unit in a first step
- detects activities of the manually operated simulator assembly and assesses the detected activities
and/or
- asks for user input about his/her skills,
and
in a second step
considers, based on an assessment made on the detected activities and/or on the user's input referring to his/her skills, the categories of skills stored in its memory to generate the customized curriculum.
